# EUROPÄISCHE PATENTSCHRIFT

(11) **EP 1 150 878 B1**
(45) Veröffentlichungstag und Bekanntmachung des Hinweises auf die Patenterteilung: **02.01.2003**
(21) Anmeldenummer: 00909098.6
(22) Anmeldetag: 25.01.2000
(51) Int. Cl.: B62D 29/00

(54) **STRUKTURTRÄGER**
STRUCTURAL SUPPORT
SUPPORT DE STRUCTURE

(30) Priorität: 05.02.1999 EP 99810099
(43) Veröffentlichungstag der Anmeldung: 07.11.2001
(73) Patentinhaber: Alcan Technology & Management AG, 8212 Neuhausen am Rheinfall (CH)
(72) Erfinder: RÖLLIN, Ulrich, CH-8048 Zürich (CH); STREIFF, Samuel, CH-5210 Windisch (CH)
(86) Internationale Anmeldenummer: EP0000529
(87) Internationale Veröffentlichungsnummer: WO00046094

(56) Entgegenhaltungen:
- EP-A- 0 317 109
- EP-A- 0 733 537
- US-A- 2 356 624
- US-A- 5 190 803
- US-A- 5 507 522

## Beschreibung

Vorliegende Erfindung betrifft einen Strukturträger für Kabinen, insbesondere für Fahrzeugkabinen von Strassen- oder Schienenfahrzeuge, von Schwebe- oder Gondelbahnen, oder von Wagenkastenkonstruktionen für Strassen- oder Schienenfahrzeuge, wobei der Strukturträger im Querschnitt aus einem ersten Profilteil aus faserverstärktem Kunststoff und einem zweiten Profilteil aus Metall besteht, und das Kunststoffprofilteil ein Längsprofil mit abschnittsweise unterschiedlichen Querschnittsstrukturen ist, und die Verbindung zwischen den zwei Profilteilen eine Klebverbindung oder Kunststoffschweissverbindung ist, sowie ein Verfahren zu dessen Herstellung und eine Rahmen- oder Gitterkonstruktion mit einem Strukturträger. Unter Strukturträger sind die eine Rahmen- oder Gitterkonstruktion bildenden Profile zu verstehen.

Rahmen- oder Gitterkonstruktionen für Kabinen, insbesondere Fahrzeugkabinen von Strassen- oder Schienenfahrzeugen, für Wagenkastenkonstruktionen von Strassen- oder Schienenfahrzeugen oder für andere Transportkörper, wie Schwebe- oder Gondelbahnen, etc., werden heute vorwiegend aus den Werkstoffen Eisen, Stahl, Aluminium und Kunststoffen hergestellt. In der Regel werden die Profile solcher Rahmen- oder Gitterkonstruktionen entweder aus Aluminium oder aus Kunststoff hergestellt. Die einzelnen Profile werden durch mechanische Befestigungsmittel oder durch Kleben gegenseitig gefügt.

An die Rahmenkonstruktionen werden Verkleidungen, beispielsweise Bleche, und andere funktionelle Elemente, wie beispielsweise Kunststoffplatten, Verbundplatten oder Glas, sowie Supporte, das heisst Lasten tragende Elemente, wie Konsolen oder Verbindungselemente für Profile, und Anbauteile, beispielsweise Schlösser, Scharniere, Trittbretter, etc., angebracht.

Die Profile für Rahmenkonstruktionen werden heute mehrheitlich als Komplettteil aus einem Stück oder zumindest aus demselben Werkstoff, vorwiegend aus Aluminium, gefertigt. Ferner sind auch Rahmenkonstruktionen bekannt, bei welchen zwischen zwei Metallprofilteilen ein isolierendes Material eingeschoben ist.

Auf der jeweils einen Profilseite, in der Regel auf der Innenseite, benötigt man häufig unterschiedliche Querschnittsstrukturen, welche beispielsweise dafür ausgelegt sind, Supporte, Wandelemente, Verkleidungsteile oder Anbauteile aufzunehmen.

Mit "Innenseite" bzw. "innen liegend" oder "innere" ist die dem Innenraum der Kabine bzw. des Transportkörpers zugewandte Seite zu verstehen, während mit "Aussenseite" bzw. "aussen liegend" oder "äussere" die dem Innenraum der Kabine bzw. des Transportkörpers abgewandte Seite gemeint ist.

Im weiteren ist es häufig notwendig den Profilquerschnitt in gewissen, überdurchschnittlich beanspruchten Bereichen örtlich gegen Schub- und Zugkräfte zu verstärken.

In der US 5,507,522 wird ein Hybrid-Träger als seitlicher Längsträger eines Leiterrahmens für einen Fahrzeugunterbau beschrieben. Der Hybrid-Träger besteht aus wenigstens drei Teilprofilen, nämlich aus einem wellenartig strukturierten Kunststoffprofil, welches wiederum aus zwei spiegelsymmetrischen Teilprofilen aufgebaut sein kann, sowie aus zwei bandförmigen U-Profilen aus Metall, welche an zwei gegenüberliegenden Seiten dem Kunststoffprofil anliegen und dieses umhüllen. Die einzelnen Profilteile sind mittel Klebverbindung miteinander verbunden.

Die US 5,190,803 beschreibt ein Strukturteil aus einem schalenförmigen ersten Teil aus Metall und einer zur Versteifung der Struktur in das schalenförmige Teil eingelassene Rippenstruktur aus Kunststoff.

Die US 2,356,624 beschreibt eine selbsttragende Fahrzeug-Karosserie, Die Karosserie enthält einen Metallrahmen, an welchen aussenseitig aus Kunstharzen hergestellte Pressteile gefügt sind.

Die EP 0 317 109 beschreibt eine Profilstruktur, welche aus einer ersten Struktur aus einem Metall und einer zweiten aussen liegenden Struktur aus Kunststoff besteht, wobei die zweite Struktur aus Kunststoff eine Finish-Struktur mit geringen Toleranzen aufweist, welche teilflächig der ersten Struktur aufgesetzt und mit dieser verklebt ist.

Die gattungsgemässe EP 0 733 537 beschreibt einen Türrahmen mit einem aussen liegenden Verkleidungsteil aus Kunststoff, welches auf die Rahmenstruktur des Türrahmens aufgeklebt ist.

Aufgabe vorliegender Erfindung sind Strukturträger für eine Rahmenkonstruktion, welche leicht sind, örtlich individuell verstärkt werden können, den einfachen Anbau von Supporten für Profilverbindungen, von Verkleidungselementen und von Anbauteilen, wie Scharniere oder Schlösser, gewährleisten, und welche ein optimales und kontrolliertes Knautsch- und

Crashverhalten sowie eine hohe Festigkeit aufweisen und gut isolierend sind. Der Strukturträger soll im weiteren sowohl bezüglich einwirkenden Längs- und Querkräften als auch in Bezug auf Scherkräfte äusserst stabil und bruch- und biegefest sein.

Erfindungsgemäss wird dies dadurch erreicht, dass die unterschiedlichen Querschnittsstrukturen für besondere funktionelle Aufgaben, wie zur Aufnahme von Apparateträgern, Wand-, Dach-, oder Scheibenelementen oder zur Aufnahme von Supporten für Verbindungen mit anderen Profilen oder Anbauteilen, ausgelegt sind, und der Wärmeausdehnungskoeffizient des ersten Profilteils durch die Menge und/oder stoffliche Zusammensetzung eines beigemengten Füllmaterials und/oder durch die Menge und/oder stoffliche Zusammensetzung des Faserverstärkungsmaterials an den Wärmeausdehnungskoeffizienten des zweiten Profilteils angeglichen ist, wobei der Wärmeausdehnungskoeffizient des ersten Profilteils weniger als 10% vom Wärmeausdehnungskoeffizient des zweiten Profilteils abweicht.

Vorzugsweise besteht der Profilquerschnitt der Strukturträger aus zwei Profilteilen, wobei das eine Profilteil vorzugsweise vollständig aus Metall und das andere Profilteil vorzugsweise vollständig aus Kunststoff ist.

Eine Rahmen- oder Gitterkonstruktion kann vollständig oder teilweise ans den erfindungsgemässen Strukturträgern bestehen.

Das Profilteil aus Metall (Metallprofilteil) besteht vorteilhaft aus einem Eisen- oder Nicht-Eisenmetall, wie Eisen, verzinktes Eisen, Stahl, Messing, Aluminium und seine Legierungen oder Magnesium und seine Legierungen. Das Metallprofilteil ist vorzugsweise ein Strangpressprofil aus Metall, insbesondere aus Aluminium oder seinen Legierungen. Das Metallprofilteil kann in seiner Längsrichtung beliebig verformt werden sowie auch in seiner Querschnittstruktur verändert werden, wobei die Querschnittsstruktur des Profilteils lokal, abschnittsweise oder auch durchgehend durch Biegen, Verformen, Schneiden, ausklinken oder auf eine andere Art verändert werden kann. Die Wanddicke der Metallprofilteile, insbesondere aus Aluminium, beträgt zweckmässig 1,5 - 7 mm, vorzugsweise 2 - 5 mm, idealerweise rund 3 mm.

Das Profilteil aus Kunststoff (Kunststoffprofilteil) ist zweckmässig aus verstärkten und vorzugsweise aus faserverstärkten Kunststoffen. AJs Verstärkungsfasern können insbesondere anorganische Fasern, wie Glasfasern, Kohle- oder Graphitfasern, Metallfasern, keramische Fasern oder Fasern aus Cellulosederivaten oder aus Polyvinylchloriden, Polyacrylonitrilen, Polyolefinen, Polyestem, Polyamiden oder Aramidfasern, etc., oder Naturfasern, wie faserartige Silikatminerale, Jute, Sisal, Hanf, Baumwolle, etc., verwendet werden. Die Kunststoffe können auch mit Geweben, Gewirken, Matten oder Vliesen aus genannten Materialien verstärkte Kunststoffe, sein. Als Verstärkungsmaterial können auch Schichten, Stäbe, Platten oder Folien aus geeigneten Materialien, beispielsweise aus oben genannten Materialien, in den Kunststoff eingelegt sein. Vorteilhaft werden Glasfasern, Kohlefasern oder Aramidfasern eingesetzt und idealerweise werden die Fasern in Form von Rovings, Geweben, Gelegen oder multiaxialen Gelegen in Pressverfahren verarbeitet, wobei die Fasern zweckmässig in Profillängsrichtung orientiert sind.

Der Fasergehalt des Kunststoffteils beträgt beispielsweise 40 - 60 Vol.-%.

Da insbesondere bei der Verwendung von Fasergeweben etc. die Fasern der verstärkten Kunststoffteilprofile gezielt in eine oder mehrere Richtungen und insbesondere in Profillängsrichtung orientiert sind, weist das Kunststoffprofilteil gegenüber Scherkräften und auch Querkräften eine geringere Belastbarkeit bzw. Festigkeit auf. Diese Nachteile werden durch die Ergänzung des Kunststoffprofilteiles mit einem Metallprofilteil behoben.

Der Kunststoff kann im weiteren, beispielsweise neben Verstärkungsfasern, auch Füllstoffe enthalten, welche beispielsweise grob- oder feinkörnig, plättchenförmig, etc., sein können. Füllstoffe, wie beispielsweise Kalziumkarbonat, Kaolin, Glas, Glimmer, Talk, Silikate, ) Wollastonit oder Aluminiumoxide, reduzieren den thermischen Ausdehnungskoeffizienten (Wärmedehnungskoeffizient) des Kunststoffes. Füllstoffe, wie Aluminiumoxide und Antimonoxid, können verwendet werden, um die Feuerfestigkeit des Kunststoffes zu erhöhen und Füllstoffe, wie Glimmer und Silikate, können eingesetzt werden, um die chemische Widerstandsfähigkeit des Kunststoffes zu erhöhen. Elektrisch leitendes Füllmaterial, wie Metallpulver und Graphit oder Russ, wird verwendet, um statisches Aufladen des Kunststoffes zu vermeiden. Füllstoffe, wie beispielsweise Kalk, Kohlepartikel oder Titandioxid, können als Pigmente eingesetzt werden.

Der Kunststoff bzw. der Matrix-bildende Kunststoff bei verstärkten Kunststoffen kann ein duroplastischer Kunststoff, nachfolgend Duroplast genannt, oder ein thermoplastischer Kunststoff, nachfolgend Thermoplast genannt, sein. Duroplaste können beispielsweise Epoxidharze, Phenol-Formaldehydharze, Harnstoff-Formaldehydharze, Melamin-Formaldehydharze resp. Melamin-Phenol-Formaldehydharze, ungesättigte Polyesterharze, Polyimide oder Polyurethane sein. Idealerweise bestehen die Duroplaste aus Epoxidharzen.

Geeignete Thermoplaste sind beispielsweise Polyolefine, wie Polyethylen und Polypropylen, Polyester, Polyvinylchlorid (PVC), Polyamide, Polycarbonate (PC), sowie Acrylnitril-Butadien-Styrol-Copolymere (ABS) oder Polyblends aus ABS und PVC, aus ABS und PC oder aus ABS und Polyurethan, weiters auch Styrol-Acrylnitril-Copolymere (SAN). Idealerweise bestehen die Thermoplaste aus Polyethylenen oder Polyamiden.

Das Kunststoffprofilteil wird beispielsweise tiefgezogen, extrudiert, laminiert, gepresst, gegossen, indiziert oder thermoverformt, etc. Für die Herstellung des Kunststoffprofilteiles wird das Verfahren gewählt, welches beim herzustellenden Profil praktisch keine Toleranzen aufweist. Das heisst, die Abmessungen und die Geometrie des Profilteils entsprechen genau der angestrebten Idealform. Die Wanddicken der Kunststoffprofilteile beträgt zweckmässig 1,5 - 10 mm, vorzugsweise 2 - 7 mm, idealerweise 4 - 5 mm.

Bei der Herstellung solcher Kunststoffprofilteile besteht im weiteren die Möglichkeit bereits Einlagen, wie beispielsweise Support- oder Anbauteile aus Metall oder aus anderen Materialien, vorzusehen. Das heisst, Support- oder Anbauteile können in die Herstellungsform eingelegt und auf diese Weise in den Strukturkörper integriert werden.

Das Kunststoffprofilteil kann ebenfalls als Längsprofil, beispielsweise mit unterschiedlichen Querschnittsstrukturen, hergestellt werden und in einem anschliessenden Verfahren in seiner Längsausrichtung wunschgemäss zugeformt werden. Auf diese Weise könne beispielsweise Profilrahmen zur Aufnahme von Türelementen oder allgemein Profilrahmen für Kabinen und Transportkörper hergestellt werden.

Das Kunststoffprofilteil kann auch ein Struktur- bzw. Integralschaum sein, wobei vorzugsweise an einem oder auch an beiden Randbereichen und insbesondere an den Oberflächen die Dichte am grössten ist. Die Oberfläche ist vorzugsweise zu einer harten, festen Schale verdichtet, wobei die Dichte insbesondere gegen den Schichtkern hin gleichmässig oder stufenweise abnimmt und sich ein zelliger, poröser Kern ausbildet.

Das Metall- und Kunststoffprofilteil der Strukturträger weisen vorzugsweise einen möglichst übereinstimmenden Wärmedehnungskoeffizient auf. Der Wärmedehnungskoeffizient des Kunststoffprofilteils weicht beispielsweise weniger als 10 %, vorzugsweise weniger als 5% und idealerweise weniger als 2% vom Wärmedehnungskoeffizient des Metallprofilteils ab.

Der Wärmedehnungskoeffizient des Kunststoffprofilteils kann beispielsweise durch die Menge und/oder die Zusammensetzung des Füllmaterials bestimmt werden. Bei verstärkten oder faserverstärkten Kunststoffen kann der Wärmedehnungskoeffizient im weiteren auch durch die Menge und/oder die Zusammensetzung des Verstärkungsmaterials, bzw. des Fasermaterials, bestimmt werden. Dadurch lassen sich Kunststoffprofilteile herstellen, welche den annähernd gleichen Wärmedehnungskoeffizient aufweisen, wie die mit diesen zu verbindenden Metallprofilteile.

Sowohl das Kunststoff-, als auch das Metallprofilteil, können als aussenseitiges und/oder innenseitiges Profilteil eingesetzt werden.

Müssen die aussen liegenden Profilteile besondere Anforderungen in Bezug auf die Oberflächenbehandlung und der Oberflächengüte erfüllen, was beispielsweise in der Automobilindustrie der Fall ist, so liegen idealerweise die Metallprofilteile aussenseitig.

Vorzugsweise verwendet man in diesem Fall Aluminiumprofilteile, welche sich beispielsweise besonders gut Glänzen und Spiegeln lassen, und welche eine dauerhafte Oberflächengüte aufweisen.

Für andere Anwendungszwecke kann auch das Kunststoffprofilteil aussen liegen. Diese Ausführungsform ist beispielsweise geeignet, wenn es darum geht, die Reflexion von auftreffenden Radarimpulsen am Strukturträger zu verhindern oder zu reduzieren. Das Kunststoffprofilteil weist in diesem Fall vorzugsweise eine grobe oder perforierte Oberfläche auf.

Das Zusammenfügen zweier Profilteile erfolgt beispielsweise durch Kleben oder durch thermoplastisches Verbinden. Die thermoplastische Verbindung kann entweder durch thermoplastisches Kleben oder durch thermoplastisches Schweissen erfolgen.

Bei der Verwendung eines Schmelzklebers werden z.B. vor dem Fügeprozess beide Profilteile soweit erwärmt, dass der Schmelzkleber aktiviert wird. Unter Fügeprozess ist dabei das Zusammenbringen und dauerhafte, trennfeste Verbinden zweier Profilteile zu verstehen.

Beim Verbinden von zwei Profilteilen können z.B. dieselben auf eine Aktivierungstemperatur des Klebers von beispielsweise ca. 80° C bis ca. 150° C gebracht werden, wobei dieser die beiden Profilteile miteinander verbindet.

Beim Einsatz von thermoplastischen Verbindungstechniken wird z.B. das Metallprofilteil vor dem Fügeprozess erwärmt, z.B. auf eine Temperatur von 200° - 240° C, insbesondere von rund 220° C. Thermoplastischer Kunststoff wird während des Fügeprozesses durch das erwärmte Metallprofil an den Kontaktstellen zum Schmelzen gebracht und verbindet die beiden Teile bei nachfolgender Abkühlung dauerhaft und trennfest. Das Kunststoffprofilteil ist vorzugsweise selbst ein Thermoplast, welcher beim Fügeprozess an den Verbindungsstellen partiell oder durchgehend zum Schmelzen gebracht wird, so dass das Kunststoffprofilteil selbst lokal als Schmelzkleber aktiviert wird.

Die Temperatur fällt in der Regel ausserhalb der lokalen Aufwärmzone des Thermoplastes sehr schnell ab, so dass das Kunststoffprofilteil als Ganzes durch die lokale Erwärmung nicht beeinträchtigt wird.

Als Kleber kommen beispielsweise Phenolharze, Epoxidharze, Polyurethan oder Cyanacrylate in Frage. Für Klebverbindungen können auch Klebebänder oder Doppelklebebänder verwendet werden.

Die Klebverbindungen bzw. thermoplastischen Verbindungen können im weiteren durch zusätzliche mechanische Befestigungsmittel, wie Nieten oder Schrauben oder Clipverbindungen, örtlich oder durchgehend unterstützt oder verstärkt werden.

Die Klebverbindung und gegebenenfalls ein zusätzlich auf die Kontaktstellen aufgebrachtes Zwischenband nehmen im weiteren Spannungskräfte auf, welche infolge eines unterschiedlichen Wärmedehnungskoeffizienten der Profilteile oder infolge vorhandener Toleranzen bei den Profilteilen auftreten können. Das Zwischenband kann ein textiles Band, ein Schaumstoffband oder ein Kunststoffband sein, insbesondere kann es ein Dilatationsband sein, das heisst ein dehnbares Zwischenband. Werden Klebebänder, vorzugsweise Doppelklebebänder, zum verbinden der Profilteile verwendet, so können diese sogleich auch als Zwischenband mit genannter Funktion dienen. Die beiden Profile können vor dem Fügeprozess bereits vorlackiert bzw. grundiert sein, wobei die Profilteile in diesem Fall für den Fügeprozess vorzugsweise nicht über 80° bis 150° C erwärmt werden.

Nach dem Zusammenfügen kann der komplette Strukturträger beispielsweise endlackiert werden.

Die beiden Profilteile weisen vorzugsweise keine hinterschnittenen Klebeflächen auf, so dass keine Hinterschneidungen beim gegenseitigen Fügeprozess vorhanden sind. Dies bedeutet, die beiden Profilteile können beim Verbindungsvorgang mit einer linearen Bewegung gegeneinander gepresst und zusammengefügt werden.

Diese Verbindungstechnik erlaubt es, falls es der Klebstoff erfordert, durch Ausübung eines zusätzlichen Druckes, beispielsweise durch Anpressdruck oder mittels Durchlaufrollen, eine schnelle und kraftübertragende Verbindung herzustellen.

Es können fallweise auch Klebflächen an hinterschnittenen Profilflächen vorgesehen sein, wobei beim Fügeprozess mit den Profilteilen beispielsweise auch Dreh- oder Einlenkbewegungen ausgeführt werden müssen.

Das Metallprofilteil kann im Gegensatz zum Kunststoffprofilteil unter Umständen grössere Toleranzen aufweisen, welche vor dem Fügeprozess ausgeglichen werden müssen, damit keine übermässigen Spannungen im Strukturträger auftreten.

Das Metallprofil wird deshalb, falls notwendig, vor dem Fügeprozess in eine Vorrichtung oder Lehre gespannt, wo es unter plastischer Verformung in die Idealform gebracht wird. Vorzugsweise wird das Metallprofilteil vorgängig erwärmt.

Zum Ausgleich der Toleranzen des Metallprofiles kann auch ein dehnbares Zwischenband, ein sogenannte Dilatationsband oder Doppelklebeband auf eine oder beide Profilteile appliziert werden. Demselben Zweck dient auch eine Vorbehandlung einer der beiden Profilteile mit einer Klebmasse.

Strukturträger erfüllen verschiedene Aufgaben und haben beispielsweise Wand-, Dach- und Scheibenelemente, Apparateträger, sowie Supporte für Verbindungen mit anderen Profilen und Anbauteilen, wie Schlösser oder Scharniere aufzunehmen, wobei diese Teile stabil an die Strukturträger fixiert sein müssen. Die Querschnittsstrukturen solcher Profile müssen deshalb entsprechend den ihnen zukommenden Funktionen ausgebildet sein.

In der Regel wird nur eine Seite des Strukturträgers, meistens das innen liegende Profilteil, multifunktional beansprucht. Dieses muss entsprechend angepasste Querschnittsprofilstrukturen aufweisen, wie beispielsweise balkonartige Ausbildungen zur Aufnahme von Apparateträgern, etc. Das aussen liegende Profilteil erfüllt in der Regel weniger funktionelle Aufgaben und enthält deshalb weniger oder keine Querschnittsänderungen.

Ein erfindungsgemässer Strukturträger enthält vorzugsweise ein über den ganzen Strukturträger durchgehendes Profilteil mit vorzugsweise uniformen Profilquerschnitt, wobei es sich vorzugsweise um das aussen liegende Profilteil aus Metall handelt. Dieses Profilteil kann jedoch gegebenenfalls lokal oder abschnittsweise ebenfalls unterschiedliche Querschnittsstrukturen aufweisen und beispielsweise örtliche oder durchgehende Umformungen aufweisen. Das andere, beispielsweise innen liegende Profilteil aus Kunststoff, weist vorzugsweise unterschiedliche, auf besondere Funktionen ausgerichtete Querschnittsstrukturen auf. Dieses Profilteil kann aus mehreren Längsprofilteilen mit unterschiedlichen Profilquerschnitten bestehen oder das vollständige Profilteil wird beispielsweise durch das Auswählen eines spezifischen Herstellungsverfahren als Komplettteil mit unterschiedlichen Querschnittsstrukturen hergestellt.

Es ist auch möglich ein aussen liegendes belastbares Profilteil, beispielsweise aus Aluminium, vorzusehen und lediglich abschnittsweise einzelne, innen liegende Profilteil, beispielsweise aus verstärktem Kunststoff, zur örtlichen Verstärkung oder zum Anbringen von Anbauteilen oder zur Aufnahme von Bauteilen, wie Wände, Dächer, Scheiben, an das aussen liegende Profilteil anzubringen.

Zwischen zwei benachbarten Profilabschnitten, im Bereich einer lokalen Querschnittsänderung, kann ein Support oder Anbauteil, beispielsweise ein Anschlag, das heisst, ein am Profil vor- bzw. abstehendes Teil aus Metall oder Kunststoff verbindend eingebaut sein.

Der Einbau von Anbauteilen kann entweder vor oder nach dem Zusammenfügen der Profilteile geschehen. Als Befestigungsmittel wird vorzugsweise eine Klebverbindung oder eine thermoplastische Verbindung gewählt.

Anbauteile können aber fallweise auch mittels bekannten mechanischen Befestigungsmitteln wie Schrauben oder Nieten an das Profil bzw. Profilteil angebracht werden

Die beispielsweise offenen Profilteile, das heisst das innere und/oder das äussere Profilteil, können vor dem Zusammenfügen über die ganze Länge oder über bestimmte Längsbereiche des Strukturträgers beispielsweise zur Verstärkung des Strukturträgers oder zu Isolationszwecken mit Schaumstoff hinterlegt werden. Ferner ist das Aufschäumen von Hohlkörpern am Profil bzw. Profilteil möglich.

Die beiden Profilteile können im zusammengefügten Zustand ein der Längsform der Profilteile folgendes Längselement, beispielsweise einen Träger, ein Profil, einen Balken, vorzugsweise Verbundwerkstoffe enthaltend, umhüllen, vorzugsweise mindestens teilweise formschlüssig umschliessen. Die Profilteile können zusätzlich durch Klebverbindungen, thermoplastische Verbindungen oder durch mechanische Verbindungen, wie Nieten, Schrauben, Klemmen mit dem umhüllenden Längselement trennfest verbunden sein.

Zum Zweck der Festigkeitserhöhung, der Verbesserung des Crashverhaltens von Rahmenkonstruktionen oder zum Zweck der Wärme- oder Schallisolation, kann beispielsweise auch ein Schaumstoffteil als Anschlag-Bauteil vorgesehen sein.

Die beiden Profilteile können auch als Voll- oder Hohlprofil ausgebildet sein. Bei der Verwendung von Hohlprofilteilen können durch den Fügeprozess Mehrkammerhohlprofile erhalten werden. Die beiden Profilteile oder eines der beiden können zur Aussteifung und

Verstärkung der Rahmenkonstruktion über die gesamten Länge des Strukturträgers oder abschnittsweise als Hohlkörper ausgebildet sein. Durchgehende Hohlkörper können im weiteren zusätzliche Funktionen übernehmen und beispielsweise als Kabelkanal dienen.

Die beiden Profilteile können ebenfalls örtlich geschlossene Hohlkörper aufweisen, welche einerseits zu einer lokal höheren Festigkeit führen und andererseits als Flüssigkeitstank, beispielsweise als Scheibenwaschflüssigkeitstank bei Fahrzeugen, dienen können.

Zur Verbesserung der Oberflächengüte oder zur Gestaltung eines individuellen Designs können an die Sichtseiten der Profilteile bzw. der Strukturträger mittels Clip- oder Schnappverbindungen, Kleben oder anderen Befestigungsmitteln, wie Nieten, Schrauben oder eine Kombination von diesen, zusätzliche Kunststoff- oder Metallbauteile angebracht werden.

Der Einsatz und die Verwendung der erfindungsgemässen Strukturträgern ist vielfältig. Die Strukturträger werden bevorzugt für Fahrzeugkabinen und Kabinen allgemein eingesetzt, welche für Personentransporte dienen, da an solche Kabinen hohe Anforderungen an ein kontrolliertes Crash- und Stauchverhalten zum Schutz der Passagiere gestellt werden und die Vermeidung von Kältebrücken bei den Rahmenprofilen in Bezug auf die Isolation sehr wichtig ist. Ein Strukturträger kann als Strukturrahmen bzw. Rahmenprofil ausgebildet sein, das heisst, ein Strukturträger bildet als Komplettteil gleichzeitig das Rahmenprofil. Beispielsweise kann der Strukturträger als Rahmen einer Fahrzeugkabine zur Aufnahme einer Fahrzeugtüre ausgebildet sein.

Da der innen liegende Profilteil aus Kunststoff ist, können im Kabineninneren problemlos und ohne grossen Aufwand Anbauteile, Verkleidungselemente etc. an die Strukturträger angeklebt werden. Im Gegensatz zu Metalloberflächen müssen an den Kunststoffteilen keine aufwendigen Oberflächenbehandlungen für die Klebeverbindungen durchgeführt werden.

Die erfindungsgemässen Strukturträger weisen den grossen Vorteil auf, dass durch den beschriebenen Werkstoffverbund, sowohl die positiven Eigenschaften von Metall als auch die vorteilhaften Eigenschaften des Kunststoffes, insbesondere des verstärkten Kunststoffes, genutzt werden können.

Die erfindungsgemässen Strukturträger weisen im weiteren keine Kältebrücken auf und verfügen über hervorragende Isolationseigenschaften, da das eine Profilteil durchgehend aus isolierendem Kunststoff besteht. Gleichzeitig wird auch die Bildung von Kondenswasser an der Innenseite der Kabine bzw. des Transportkörpers verhindert oder zumindest reduziert.

Bei einem gesamthaft leichteren Gewicht der erfindungsgemässen Strukturträger zeichnen sich diese durch eine verbesserte Festigkeit aus. Das Kunststoffprofilteil sorgt für eine höhere Steifigkeit der Strukturträger, während das Metallprofilteil den Strukturträgern ein optimales Knautsch- bzw. Crashverhalten verleiht. Eine integrierte, ausgeschäumte Schaumpartie kann die möglichen Stabilitätsprobleme (ausknittern etc.) der Strukturträger massiv verbessern.

Weiters können die Fasern der Kunststoffteile in Profillängsrichtung ausgerichtet werden, um die auf das Profil einwirkenden Hauptkräfte (Zug- und Druckkräfte) optimal aufzunehmen, ohne dass jedoch der Strukturträger anfällig auf Scher- und Querkräfte wird.

Besteht das Kunststoffprofilteil des Strukturträgers aus einem Thermoplast, so kann das Profilteil selbst als Schmelzkleber aktiviert werden, wodurch das Aufbringen von Klebmassen oder Klebbändern überflüssig wird.

Ein erfindungsgemässer Strukturträger erlaubt im weiteren, das Querschnittsprofil auf einfache Weise lokal oder abschnittsweise zu ändern, um beispielsweise den Strukturträger örtlich zu verstärken, oder um ihn lokal als Träger für Anbauteile oder zur Aufnahme von Wand-, Dach- und Scheibenelementen anzupassen.

Im folgenden wird die Erfindung beispielhaft und mit Bezug auf die beiliegenden Zeichnungen näher erläutert. Es zeigen:
- Fig. 1a:: eine Seitenansicht eines Profilteils aus Kunststoff;
- Fig. 1b:: eine Seitenansicht eines Profilteils aus Metall;
- Fig. 1c:: eine Seitenansicht eines längsseitig verformten Profilteils gemäss Fig. 1a;
- Fig. ld:: eine Seitenansicht eines längsseitig verformten Profilteils gemäss Fig. 1b;
- Fig. le:: Querschnitt eines gefügten Profils gemäss Fig. 1c und ld;
- Fig. 2:: einen Querschnitt einer Ausführungsvariante des erfindungsgemässen Profils mit Dachelement;
- Fig. 3:: einen Querschnitt einer Ausführungsvariante des erfindungsgemässen Profils mit Anschlagteil;
- Fig. 4:: einen Querschnitt einer Ausführungsvariante des erfindungsgemässen Profils mit Anbauteil;
- Fig. 5:: einen Querschnitt einer Ausführungsvariante des erfindungsgemässen Profils mit Clip-Elementen;
- Fig. 6 a-c:: Ansicht eines erfindungsgemässen Strukturträgers mit wechselnder Querschnittsstruktur.

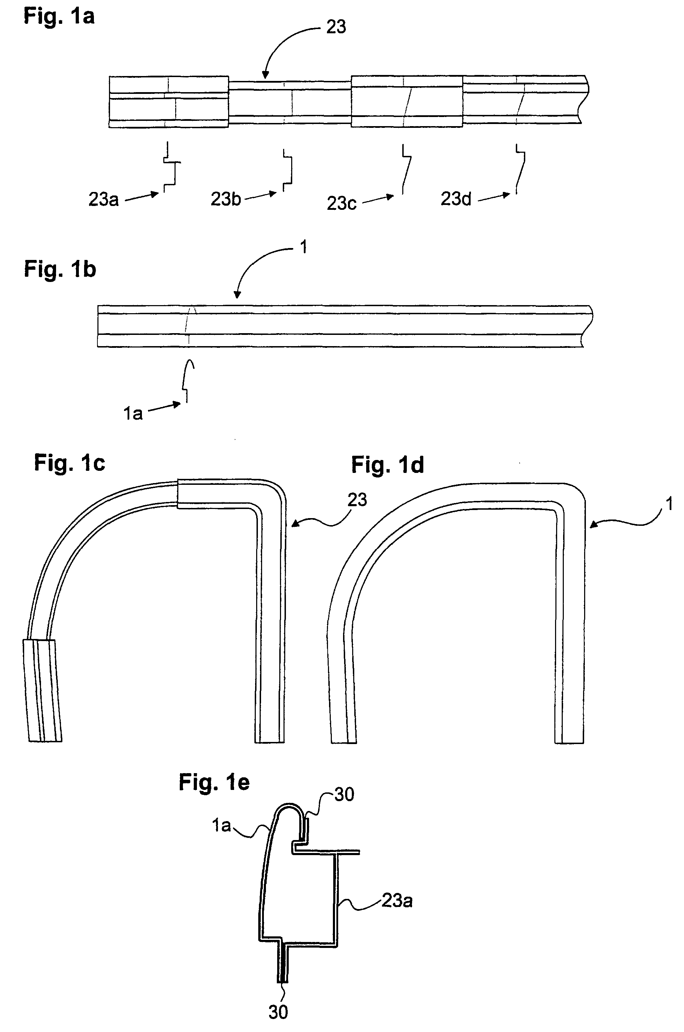

Fig. 1a zeigt ein Profilteil 23 aus verstärktem Kunststoff mit unterschiedlichen Profilquerschnitten 23a, 23b, 23c, 23d. Das Profilteil 23 ist in Fig. 1c zu einem Teilprofilrahmen für eine Kabine zur Aufnahme einer Seitentür umgeformt. Die Querschnittsstrukturen sind den lokalen Anforderungen an das Kunststoffprofil, zum Beispiel zur Aufnahme von Anschlagteilen oder anderen Elementen oder zur Verstärkung des Profils, entsprechend angepasst.

Fig. 1b zeigt ein Profilteil 1 aus Aluminium, beispielsweise ein Strangpressprofilteil, mit einheitlichem Profilquerschnitt 1a. Das Profilteil 1 ist in Fig. ld zu einem den Teilprofilrahmen 23 aus Kunststoff ergänzenden Aluminiumteilrahmen 1 umgeformt.

Die beiden Teilrahmen oder Teilprofilrahmen 1, 23 gemäss Fig. 1c und ld werden in einem weiteren Schritt zu einem kompletten Profilrahmen gefügt, beispielsweise mittels Klebverbindung 30, wobei das Aluminiumprofilteil aussen zu liegen kommt. Die beiden Teilprofilrahmen 1, 23 lassen sich passgenau über die vorgesehenen Verbindungsflächen miteinander verbinden. Fig. le zeigt einen Querschnitt durch einen gefügten Profilrahmen gemäss den Figuren 1c und ld mit den Teilprofilquerschnitten 1a und 23a.

Die Breite der Teilprofilrahmen 1, 23 gemäss Fig. 1c, ld bzw. des Profilrahmens beträgt beispielsweise 1,50 m - 3,50 m, vorzugsweise 2,00 m, und die Höhe misst beispielsweise 1,50 m - 2,50 m, vorzugsweise 2,00 m.

Der gebogene Abschnitt der Teilprofilrahmen 1, 23 gemäss Fig. 1c, ld kann an seinem unteren Ende eine Abwinkelung in Richtung des gegenüberliegenden, geradlinigen Abschnittes des Profilteilrahmens 1, 23 von beispielsweise weniger als 10°, vorzugsweise weniger als 5°, gegen die Vertikallinie aufweisen.

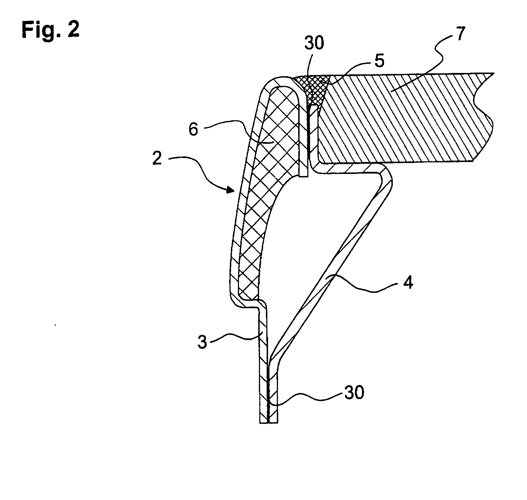

Fig. 2 zeigt einen erfindungsgemässen Strukturträger 2 zur Aufnahme eines Dachelementes 7 mit einem innen liegenden oder inneren Profilteil 4 aus faserverstärktem Kunststoff und einem aussen liegenden oder äusseren Profilteil 3 aus Aluminium. Das innere Profilteil 4 und das äussere Profilteil 3 sind mittels Klebverbindungen 30 miteinander verbunden.

Ein Dachelement 7 liegt formschlüssig am Strukturträger 2 an, wobei das Profilteil 4 zur Aufnahme desselben eine Art Balkon ausbildet, und mittels Klebfuge 5 mit diesem verbunden ist. Dem Profilteil 3 ist ferner zur besseren Schall- und Wärmeisolation eine Schaumstoffschicht 6 eingelagert.

Vergleichbar mit Fig. 2 kann der Strukturträger auch zur Aufnahme eines Fensterelementes oder eines Wandelementes, wie Rückwand, bestimmt sein. Das Fensterelement bzw. Wandelement ist in diesem Beispiel über eine Kleb- oder Dichtfuge an den einen Balkon ausbildenden Strukturträger gefügt.

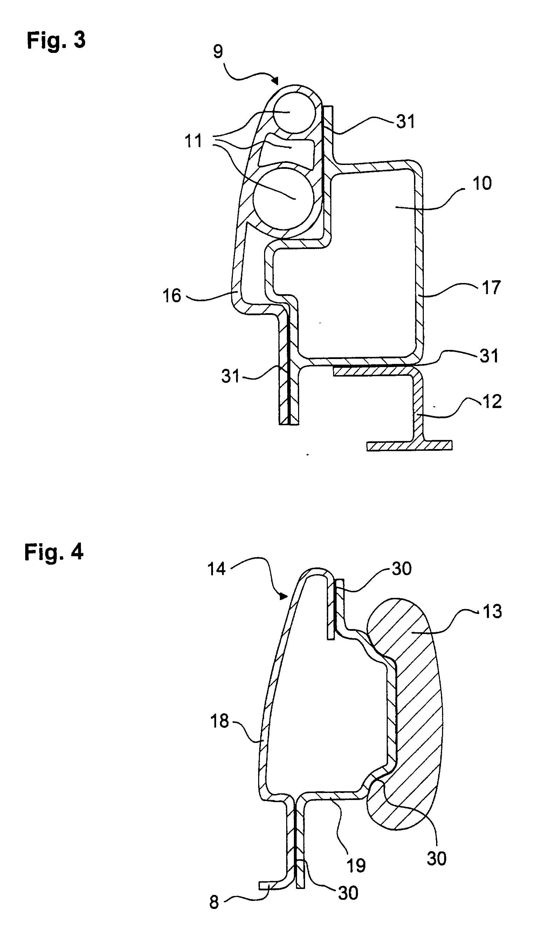

Fig. 3 zeigt einen erfindungsgemässen Strukturträger 9, bei welchem das aussen liegende Profilteil 16 aus Aluminium besteht und durchgehende Hohlräume 11 aufweist, welche beispielsweise als Kabelkanäle dienen können. Das innere Profilteil 17 aus faserverstärktem Kunststoff weist einen geschlossenen Hohlraum 10 auf, welcher beispielsweise als Flüssigkeitstank genutzt werden kann. Am inneren Profilteil 17 ist weiters ein Anschlagbauteil 12, beispielsweise aus Metall oder auch aus Kunststoff, mittels thermoplastischer Verbindung 31 angebracht. Das innere Profilteil 17 und das äussere Profilteil 16 sind mittels thermoplastischer Verbindung 31 miteinander verbunden.

Fig. 4 zeigt einen erfindungsgemässen Strukturträger 14 mit einem äusseren Profilteil 18 aus Aluminium und einem inneren Profilteil 19 aus faserverstärktem Kunststoff, an welchem ein Anbauteil 13 aus Schaumstoff mittels Klebverbindung 30 angebracht ist. Im weiteren weist das äussere Profilteil 18 eine Umformung 8 auf, welche nachträglich am Profilteil 18 ausgeführt wurde und durchgehend oder lokal sein kann, beispielsweise zur Aufnahme von Anbauteilen. Das innere Profilteil 19 und das äussere Profilteil 18 sind mittels Klebverbindungen 30 miteinander verbunden.

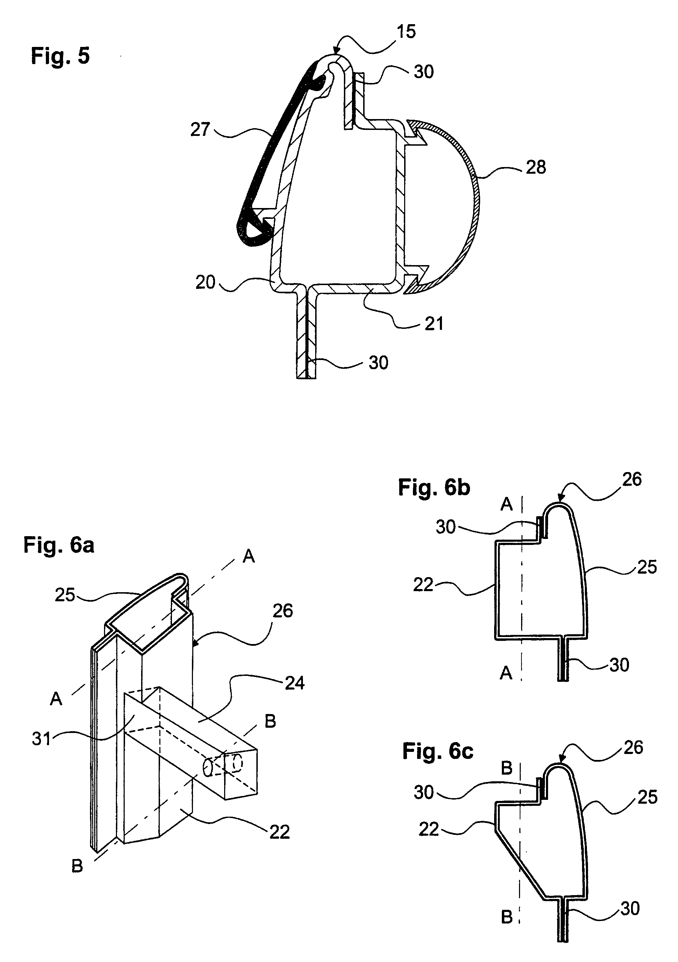

Fig. 5 zeigt einen erfindungsgemässen Strukturträger 15, welcher sowohl am äusseren Profilteil 20 als auch am inneren Profilteil 21 Clip- und/oder Schnappelemente 27, 28 enthält, die über entsprechende Clip- und/oder Schnappverbindungen mit den Profilteilen 20, 21 verbunden sind. Solche Elemente dienen einerseits zur Veränderung des Designs einer Kabine oder eines Transportkörpers und andererseits werden sie anstelle einer aufwendigen Oberflächenbehandlung der Profilaussen- bzw innenseiten verwendet. Das innere Profilteil 21 aus faserverstärktem Kunststoff und das äussere Profilteil 20 aus Aluminium sind mittels Klebverbindungen 30 miteinander verbunden.

Fig. 6a zeigt einen Ausschnitt eines erfindungsgemässen Strukturträgers 26 mit einem äusseren Profilteil 25 aus Aluminium und einem inneren Profilteil 22 aus faserverstärktem Kunststoff, wobei das innere Profilteil 22 eine Querschnittsänderung aufweist. Im Bereich der lokalen Querschnittsänderung von einem rechteckförmigen zu einem abgeschrägten Querschnitt ist ein Supportelement 24 verbindend eingebaut. Das Profilteil 22 aus faserverstärktem Kunststoff kann aus einem Stück hergestellt sein, wobei die Herstellungsform in diesem Fall entsprechende Querschnittsveränderungen mitenthält oder das Profilteil 22 kann aus zwei einzelnen Längsprofilteilen unterschiedlichen Querschnittes zusammengesetzt sein.

Das innere Profilteil 22 und das äussere Profilteil 25 sind mittels Klebverbindungen 30 miteinander verbunden.

Fig. 6b zeigt einen Querschnitt durch Fig. 6a längs der Linie A - A oberhalb des Supportes 24 mit rechteckförmigem Querschnitt des Profilteils 22, und Fig. 6c zeigt einen Querschnitt durch Fig. 6a längs der Linie B - B unterhalb des Supportes 24 mit abgeschrägtem Querschnitt des Profilteils 22.

## Patentansprüche

1. Strukturträger für Kabinen, insbesondere für Fahrzeugkabinen von Strassen- oder Schienenfahrzeuge, von Schwebe- oder Gondelbahnen, oder von Wagenkastenkonstruktionen für Strassen- oder Schienenfahrzeuge, wobei der Strukturträger (2) im Querschnitt aus einem ersten Profilteil (4) aus faserverstärktem Kunststoff und einem zweiten Profilteil (3) aus Metall besteht, und das Kunststoffprofilteil ein Längsprofil mit abschnittsweise unterschiedlichen Querschnittsstrukturen ist, und die Verbindung zwischen den zwei Profilteilen (3, 4) eine Klebverbindung (30) oder Kunststoffschweissverbindung ist,
**dadurch gekennzeichnet, dass**
die unterschiedlichen Querschnittsstrukturen für besondere funktionelle Aufgaben, wie zur Aufnahme von Apparateträgern, Wand-, Dach-, oder Scheibenelementen oder zur Aufnahme von Supporten für Verbindungen mit anderen Profilen oder Anbauteilen, ausgelegt sind, und der Wärmeausdehnungskoeffizient des ersten Profilteils (4) durch die Menge und/oder stoffliche Zusammensetzung eines beigemengten Füllmaterials und/oder durch die Menge und/oder stoffliche Zusammensetzung des Faserverstärkungsmaterials an den Wärmeausdehnungskoeffizienten des zweiten Profilteils (3) angeglichen ist, wobei der Wärmeausdehnungskoeffizient des ersten Profilteils (4) weniger als 10% vom Wärmeausdehnungskoeffizient des zweiten Profilteils (3) abweicht.

2. Strukturträger nach Anspruch 1, **dadurch gekennzeichnet, dass** der Wärmeausdehnungskoeffizient des aus faserverstärktem Kunststoff bestehenden Profilteils weniger als 5% und vorzugsweise weniger als 2 % vom Wärmeausdehnungskoeffizient des aus Metall bestehenden Profilteils abweicht.

3. Strukturträger nach einem der Ansprüche 1 bis 2, **dadurch gekennzeichnet, dass** das aus faserverstärktem Kunststoff bestehende Profilteil einen Matrix-bildenden Kunststoff aus Duroplast, zweckmässig aus einem Epoxidharz oder aus Thermoplast, zweckmässig aus einem Polyethylen oder Polyamid, enthält, und dass das aus Metall bestehende Profilteil aus Aluminium oder seinen Legierungen, vorzugsweise ein Strangpressprofil aus Aluminium oder seinen Legierungen ist.

4. Strukturträger nach einem der Ansprüche 1 bis 3, **dadurch gekennzeichnet, dass** das aus faserverstärktem Kunststoff bestehende Profilteil aus einem mit Glas-, Kohle- oder Aramidfasern verstärkten Kunststoff ist.

5. Strukturträger nach einem der Ansprüche 1 bis 4, **dadurch gekennzeichnet, dass** das Kunststoffprofilteil eine Wanddicke von 1,5 - 10 mm, vorzugsweise 2 - 7 mm, und insbesondere 4 - 5 mm hat, und dass das Metallprofilteil aus Aluminium eine Wanddicke von 1,5 - 7 mm, vorzugsweise 2 - 5 mm und insbesondere von rund 3 mm hat.

6. Strukturträger nach einem der Ansprüche 1 bis 5, **dadurch gekennzeichnet, dass** die Verbindung zwischen zwei Profilteilen eine Klebverbindung (30) ist und das Klebmittel vorzugsweise ein Kleber, insbesondere ein Schmelzkleber, oder ein Klebeband ist.

7. Strukturträger nach einem der Ansprüche 1 bis 5, **dadurch gekennzeichnet, dass** die Verbindung zwischen zwei Profilteilen (16, 17) eine thermoplastische Verbindung (31) ist und die thermoplastische Verbindung (31) eine Schmelz- oder Schweissverbindung ist.

8. Strukturträger nach einem der Ansprüche 1 bis 5, **dadurch gekennzeichnet, dass** das im wesentlichen aus Kunststoff bestehende Profilteil ein Thermoplast ist und im Bereich seiner Verbindungsflächen selbst ein thermoplastischer Kleber ist.

9. Strukturträger nach einem der Ansprüche 7 bis 8, **dadurch gekennzeichnet, dass** die Klebeflächen nicht hinterschnitten sind.

10. Strukturträger nach Anspruch 1, **dadurch gekennzeichnet, dass** an den örtlichen Querschnittsänderungen Anbauteile (24) eingebaut sind.

11. Strukturträger nach Anspruch 1, **dadurch gekennzeichnet, dass** der Konturübergang an den örtlichen Querschnittsänderungen fliessend ist.

12. Strukturträger nach einem der Ansprüche 1 bis 11, **dadurch gekennzeichnet, dass** Einlagen, insbesondere Support- oder Anbauteile aus Metall oder aus anderen Materialien in Form von Einlegeteilen in das Profilteil aus faserverstärktem Kunststoff integriert sind.

13. Verfahren zur Herstellung von Strukturträgern durch Verbinden von zwei Profilteilen nach Anspruch 1,
**dadurch gekennzeichnet, dass**
das im wesentlichen aus Metall bestehende Profilteil (16) mit dem im wesentlichen aus Kunststoff bestehenden Profilteil (17) durch Kleben oder Kunststoffschweissen verbunden wird.

14. Verfahren nach Anspruch 13 **dadurch gekennzeichnet, dass** beide Profilteile für den Fügeprozess vorgewärmt werden, vorzugsweise auf eine Temperatur von ca. 80° - 150°C, und ein Kleber aktiviert wird und die beiden Profilteile durch den Kleber verbunden und anschliessend abgekühlt werden.

15. Verfahren nach Anspruch 13, **dadurch gekennzeichnet, dass** lediglich das im wesentlichen aus Metall bestehende Profilteil für den Fügeprozess vorgewärmt wird, vorzugsweise auf eine Temperatur von 200° - 240° C, insbesondere von 220° C, und ein thermoplastischer Kunststoff zum Schmelzen gebracht wird und die beiden Profilteile durch den erweichten oder flüssigen thermoplastischen Kunststoff, vorzugsweise unter gegenseitiger Druckbeaufschlagung der Klebeflächen, verbunden und anschliessend abgekühlt werden.

16. Verfahren nach Anspruch 13, **dadurch gekennzeichnet, dass** das im wesentlichen aus Kunststoff bestehende Profilteil aus einem thermoplastischen Kunststoff ist und das Profilteil aus Kunststoff durch gezieltes lokales Erwärmen selbst als Schmelzkleber partiell oder durchgehend aktiviert wird und mit dem im wesentlichen aus Metall bestehenden Profilteil, vorzugsweise unter Druck, verbunden und anschliessend abgekühlt wird.

17. Verfahren nach einem der Ansprüche 13 bis 16, **dadurch gekennzeichnet, dass** die Klebeflächen der beiden Profilteile während des Fügevorganges mit einer linearen Bewegung zusammengeführt werden.

18. Verfahren nach Anspruch 13, **dadurch gekennzeichnet, dass** das im wesentlichen aus Metall bestehende Profilteil vor dem Fügeprozess erwärmt und in eine fixierende Vorrichtung oder Lehre eingespannt wird und Toleranzen durch plastisches Verformen des Profilteils ausgeglichen werden.

19. Rahmen- oder Gitterkonstruktion von Kabinen, insbesondere von Fahrzeugkabinen für Strassen- oder Schienenfahrzeuge, von Schwebe- oder Gondelbahnen, oder von Wagenkastenkonstruktionen für Strassen- oder Schienenfahrzeuge, mit einem Strukturträger nach Anspruch 1.

20. Rahmen- oder Gitterkonstruktion nach Anspruch 19, **dadurch gekennzeichnet, dass** das erste Profilteil (4) das innen liegende, dem Innenraum der Kabine oder des Wagenkastens zugewandte Profilteil und das zweite Profilteil (3) das aussen liegende, dem Innenraum der Kabine oder des Wagenkastens abgewandte Profilteil ist.

## Claims

1. Structural support for cabs, in particular for cabs of road or rail vehicles, suspension or cable railways or body constructions for road or rail vehicles, the structural support (2) consisting in cross section of a first profile part (4) made of fibre-reinforced plastic and a second profile part (3) made of metal, the plastic profile part being a longitudinal profile with different cross-sectional structures in portions and the joint between the two profile parts (3, 4) being a bonded joint (30) or plastic welded joint, **characterised in that** the different cross-sectional structures are designed for particular functional tasks, such as for receiving equipment supports, wall elements, roof elements or windscreen elements, or for receiving supports for joints with other profiles or add-on components, and the coefficient of thermal expansion of the first profile part (4) is adapted to the coefficient of thermal expansion of the second profile part (3) by the quantity and/or material composition of an added filler and/or by the quantity and/or material composition of the fibre-reinforcing material, the coefficient of thermal expansion of the first profile part (4) deviating by less than 10 % from the coefficient of thermal expansion of the second profile part (3).

2. Structural support according to claim 1, **characterised in that** the coefficient of thermal expansion of the profile part consisting of fibre-reinforced plastic deviates by less than 5 % and preferably less than 2 % from the coefficient of thermal expansion of the profile part consisting of metal.

3. Structural support according to one of claims 1 to 2, **characterised in that** the profile part consisting of fibre-reinforced plastic contains a matrix-forming plastic made of thermoset, advantageously an epoxy resin or thermoplastic, advantageously a polyethylene or polyamide, and that the profile part consisting of metal is made of aluminium or its alloys, preferably an extruded profile made of aluminium or its alloys.

4. Structural support according to one of claims 1 to 3, **characterised in that** the profile part consisting of fibre-reinforced plastic is made of a plastic reinforced with glass fibres, carbon fibres or aramide fibres.

5. Structural support according to one of claims 1 to 4, **characterised in that** the plastic profile part has a wall thickness of 1.5 - 10 mm, preferably 2 - 7 mm and, in particular, 4 - 5 mm, and that the metal profile part made of aluminium has a wall thickness of 1.5 - 7 mm, preferably 2 - 5 mm and, in particular, approximately 3 mm.

6. Structural support according to one of claims 1 to 5, **characterised in that** the joint between two profile parts is a bonded joint (30) and the bonding agent is preferably an adhesive, in particular a hot-melt adhesive, or an adhesive tape.

7. Structural support according to one of claims 1 to 5, **characterised in that** the joint between two profile parts (16, 17) is a thermoplastic joint (31) and the thermoplastic joint (31) is a fusion joint or welded joint.

8. Structural support according to one of claims 1 to 5, **characterised in that** the profile part consisting substantially of plastic is a thermoplastic and is itself a thermoplastic adhesive in the region of its joining surfaces.

9. Structural support according to one of claims 7 to 8, **characterised in that** the adherent surfaces are not undercut.

10. Structural support according to claim 1, **characterised in that** add-on components (24) are fitted at the local changes in cross section.

11. Structural support according to claim 1, **characterised by** a smooth transition at the local changes in cross section.

12. Structural support according to one of claims 1 to 11, **characterised in that** inserts, in particular supporting components or add-on components made of metal or other materials are integrated into the profile part made of fibre-reinforced plastic in the form of insert components.

13. Process for the production of structural supports by joining together two profile parts according to claim 1, **characterised in that** the profile part (16) consisting substantially of metal is joined to the profile part (17) consisting substantially of plastic by bonding or plastic welding.

14. Process according to claim 13, **characterised in that** both profile parts are preheated for the joining process, preferably to a temperature of approximately 80° - 150°C, an adhesive is activated and the two profile parts are joined together by the adhesive and then cooled.

15. Process according to claim 13, **characterised in that** only the profile part consisting substantially of metal is preheated for the joining process, preferably to a temperature of 200 - 240°C, in particular 220°C, a thermoplastic is liquefied and the two profile parts are joined together by the softened or liquid thermoplastic, preferably with mutual application of pressure by the adherent surfaces, and then cooled.

16. Process according to claim 13, **characterised in that** the profile part consisting substantially of plastic is made of a thermoplastic and the profile part made of plastic is itself activated partially or throughout as a hot-melt adhesive by controlled local heating and is joined to the profile part consisting substantially of metal, preferably under pressure, and then cooled.

17. Process according to one of claims 13 to 16, **characterised in that** the adherent surfaces of the two profile parts are brought together by a linear movement during the joining process.

18. Process according to claim 13, **characterised in that** the profile part consisting substantially of metal is heated before the joining process and is clamped in a fixing device or jig and tolerances are compensated for by plastic deformation of the profile part.

19. Framework or lattice-type construction for cabs, in particular cabs for road or rail vehicles, suspension or cable railways or body constructions for road or rail vehicles, comprising a structural support according to claim 1.

20. Framework or lattice-type construction according to claim 19, **characterised in that** the first profile part (4) is the internal profile part directed towards the interior of the cab or body and the second profile part (3) is the external profile part directed away from the interior of the cab or body.

## Revendications

1. Support de structure pour des cabines, en particulier pour des cabines de véhicules routiers ou ferroviaires, de téléphériques suspendus ou à bennes ou de constructions de caisse pour véhicules routiers ou ferroviaires, le support de structure (2) étant constitué en section par une première partie profilée (4) en matière plastique renforcée par des fibres et par une deuxième partie profilée (3) en métal, et la partie profilée en matière plastique étant un profilé longitudinal comportant localement des structures de section différentes, et la liaison entre les deux parties profilées (3, 4) étant une liaison collée (30) ou soudée en matière plastique, **caractérisé en ce que** les structures de section différentes sont conçues pour des tâches fonctionnelles particulières, comme pour recevoir des porte-appareils, des éléments de paroi, de toiture ou de plaque ou pour recevoir des supports pour des liaisons avec d'autres profilés ou avec d'autres pièces rapportées, et **en ce que** le coefficient de dilatation thermique de la première partie profilée (4) est adapté au coefficient de dilatation thermique de la deuxième partie profilée (3) de par la quantité et/ou la composition en matières d'un matériau de remplissage ajouté et/ou de la par la quantité et/ou la composition en matières du matériau de renforcement de fibres, le coefficient de dilatation thermique de la première partie profilée (4) s'écartant de moins de 10 % du coefficient de dilation thermique de la deuxième partie profilée (3).

2. Support de structure selon la revendication 1, **caractérisé en ce que** le coefficient de dilatation thermique de la partie profilée constituée en matière plastique renforcée de fibres s'écarte de moins de 5 % et de préférence de moins de 2 % du coefficient de dilatation thermique de la partie profilée constituée en métal.

3. Support de structure selon l'une des revendications 1 et 2, **caractérisé en ce que** la partie profilée constituée en matière plastique renforcée de fibres contient une matière plastique formant matrice en matière thermodurcissable (duroplaste), judicieusement en une résine époxy, ou en matière thermoplastique (thermoplaste), judicieusement en polyéthylène ou polyamide, et **en ce que** la partie profilée en métal est constituée en aluminium ou en ses alliages, de préférence par un profilé extrudé en aluminium ou en ses alliages.

4. Support de structure selon l'une des revendications 1 à 3, **caractérisé en ce que** la partie profilée constituée en matière plastique renforcée de fibres est réalisée en matière plastique renforcée de fibres de verre, de carbone ou d'aramide.

5. Support de structure selon l'une des revendications 1 à 4, **caractérisé en ce que** la partie profilée en matière plastique présente une épaisseur de paroi de 1,5 à 10 mm, de préférence de 2 à 7 mm, et en particulier de 4 à 5 mm, et **en ce que** la partie profilée métallique en aluminium présente une épaisseur de paroi de 1,5 à 7 mm, de préférence de 2 à 5 mm et en particulier d'environ 3 mm.

6. Support de structure selon l'une des revendications 1 à 5, **caractérisé en ce que** la liaison entre deux parties profilées est une liaison collée (30) et l'adhésif est de préférence une colle, en particulier une colle fusible ou un ruban collant.

7. Support de structure selon l'une des revendications 1 à 5, **caractérisé en ce que** la liaison entre deux parties profilées (16, 17) est une liaison thermoplastique (31), et la liaison thermoplastique (31) est une liaison par fusion ou par soudage.

8. Support de structure selon l'une des revendications 1 à 5, **caractérisé en ce que** la partie profilée constituée essentiellement en matière plastique est une matière thermoplastique et est elle-même une colle thermoplastique dans la zone de ses surfaces de liaison.

9. Support de structure selon l'une des revendications 7 et 8, **caractérisé en ce que** les surfaces de collage ne sont pas en contre-dépouille.

10. Support de structure selon la revendication 1, **caractérisé en ce que** des pièces rapportées (24) sont montées sur les modifications de section locales.

11. Support de structure selon la revendication 1, **caractérisé en ce que** la transition de contour aux modifications de section locales est continue.

12. Support de structure selon l'une des revendications 1 à 11, **caractérisé en ce que** des inserts en particulier sous forme de pièces porteuses ou rapportées en métal ou en d'autres matériaux sont intégrés sous forme de pièces interposées dans la partie profilée en matière plastique renforcée de fibres.

13. Procédé pour réaliser des supports de structure par jonction de deux parties profilées selon la revendication 1, **caractérisé en ce que** l'on relie la partie profilée (16) constituée essentiellement en métal à la partie profilée (17) constituée essentiellement en matière plastique par collage ou par soudage de matière plastique.

14. Procédé selon la revendication 13, **caractérisé en ce que** l'on préchauffe les deux parties profilées pour l'opération d'assemblage, de préférence à une température d'environ 80° à 150°C, et on fait activer une colle et on relie les deux parties profilées au moyen de la colle et on les fait ensuite refroidir.

15. Procédé selon la revendication 13, **caractérisé en ce que** l'on préchauffe seulement la partie profilée constituée essentiellement en métal pour l'opération d'assemblage, de préférence à une température de 200° à 240°C, en particulier à 220°C, on fait fondre une matière thermoplastique, on relie les deux parties profilées par la matière thermoplastique ramollie ou liquide, de préférence avec mise sous pression mutuelle des surfaces de collage, et ensuite on les fait refroidir.

16. Procédé selon la revendication 13, **caractérisé en ce que** la partie profilée constituée essentiellement en matière plastique est constituée en matière thermoplastique, on fait activer la partie profilée en matière plastique en partie ou en continu par échauffement ciblé local elle-même à titre de colle fusible, on la relie à la partie profilée constituée essentiellement en métal, de préférence sous pression, et ensuite on la fait refroidir.

17. Procédé selon l'une des revendications 13 à 16, **caractérisé en ce que** pendant l'opération d'assemblage on rapproche les surfaces de collage des deux parties profilées par un mouvement linéaire.

18. Procédé selon la revendication 13, **caractérisé en ce que** l'on échauffe la partie profilée constituée essentiellement en métal avant l'opération d'assemblage et on la serre dans un dispositif de fixation ou dans un gabarit, et on compense des tolérances par une déformation plastique de la partie profilée.

19. Construction de cadre ou de treillis de cabines, en particulier de cabines de véhicules routiers ou ferroviaires, de téléphériques suspendus ou à bennes ou de constructions de caisse de véhicules routiers ou ferroviaires, comportant un support de structure selon la revendication 1.

20. Construction de cadre ou de treillis selon la revendication 19, **caractérisée en ce que** la première partie profilée (4) est la partie profilée située à l'intérieur et tournée vers le volume intérieur de la cabine ou de la caisse de véhicule, et la deuxième partie profilée (3) est la partie profilée située à l'extérieur et détournée du volume intérieur de la cabine ou de la caisse de véhicule.
